# EUROPÄISCHE PATENTSCHRIFT

(11) **EP 0 839 703 B1**
(45) Veröffentlichungstag und Bekanntmachung des Hinweises auf die Patenterteilung: **15.07.1998**
(21) Anmeldenummer: 96117556.9
(22) Anmeldetag: 02.11.1996
(51) Int. Cl.: B62D 5/32

(54) **Hydraulische Lenkeinrichtung mit Übersetzungsänderung und Stromverstärkung**
Hydraulic steering system with variable ratio and flow amplification
Système de direction hydraulique à démultiplication variable et amplification de débit

(43) Veröffentlichungstag der Anmeldung: 06.05.1998
(73) Patentinhaber: HYDRAULIK NORD GMBH, 19370 Parchim (DE)
(72) Erfinder: Bergmann, Erhard, Dr., 19079 Mirow (DE); Voss, Gerhard, 19370 Parchim (DE); Schildmann, Manfred, 19372 Karrenzin (DE)
(74) Vertreter: Jaap, Reinhard

(56) Entgegenhaltungen:
- EP-A- 0 388 711
- DE-C- 4 407 308
- DE-C-19 503 331

## Beschreibung

Die Erfindung betrifft eine hydraulische Lenkeinrichtung nach dem Oberbegriff des Anspruchs 1.
Solche Lenkeinrichtungen werden insbesondere in langsamfahrenden Fahrzeugen mit hohen Achslasten eingesetzt.

Hydraulische Lenkeinrichtungen bestehen in der Hauptsache aus einem Drehschiebersteuerventil und einem Orbitverdränger. Das Drehschiebersteuerventil wird aus einer äußeren, im Gehäuse eingepaßten Steuerhülse und einem inneren, konzentrisch angeordneten Steuerkolben gebildet. Der Steuerkolben ist einerseits über ein Zahnnabenprofil mit einem Lenkrad und andererseits über eine Stiftverbindung relativ beweglich mit der Steuerhülse verbunden. Die Steuerhülse ist über eine Stiftverbindung und eine Antriebswelle starr mit dem Läuferzahnrad des Orbitverdrängers verbunden. Der Steuerkolben ist mittels eines Federelementes gegenüber der Steuerhülse lagezentriert. Gegen die Kraft dieses Federelementes sind Steuerkolben und Steuerhülse begrenzt zueinander drehbar. Zwischen dem Drehschiebersteuerventil und dem Orbitverdränger besteht über Kommutatorbohrungen eine hydraulische Verbindung.

Die hydraulische Lenkeinrichtung besitzt Anschlüsse für einen Zulauf, einen Rücklauf und für zwei Zylinderleitungen für den Lenkzylinder.

Diese Lenkeinrichtungen zeichnen sich durch ein hohes Verdrängungsvolumen aus, besitzen aber keine Übersetzungsänderung zwischen Servolenkbetrieb und Notlenkbetrieb. Das bedeutet aber, daß bei einem möglichen Ausfall der Versorgungspumpe die Lenkeinrichtung schlagartig auf Notlenkbetrieb umschaltet und damit die gesamte notwendige Lenkkraft manuell am Lenkrad aufgebracht werden muß. Das ist insbesondere im Straßenverkehr ein Sicherheitsrisiko.
Es gibt deshalb schon seit langem das Bestreben, Lenkeinrichtungen zu schaffen, die im Notlenkbetrieb ein verändertes Übersetzungsverhältnis und damit geringere Handkräfte ermöglichen.

Eine solche Lenkeinrichtung wurde mit der DE 22 28 531 C2 bekannt, die einen Orbitverdränger mit zwei parallel geschalteten Verdrängereinheiten besitzt, deren bewegliche Zahnräder mechanisch durch eine Zahnwelle miteinander verbunden sind. In den hydraulischen Verbindungsleitungen zwischen den beiden Verdrängereinheiten sind Umschaltventile angeordnet, die bei Vorhandensein von Drucköl, also im Servolenkbetrieb, beide Verdrängereinheiten verbinden und im Notlenkbetrieb, also bei Ausfall der Versorgungspumpe, eine Verdrängereinheit unwirksam machen.
Durch das verringerte Verdrängungsvolumen wird zwangsläufig die Anzahl der notwendigen Drehungen am Lenkrad zum Erreichen eines bestimmten Einschlags der gelenkten Räder höher, aber die erforderliche Lenkkraft bleibt bei entsprechender Auslegung der Lenkung annähernd konstant und damit vom Fahrzeuglenker beherrschbar.
Allerdings ist der bauliche und damit der Kostenaufwand relativ groß. Auf Grund der komplizierten Gestaltung ist die Lenkeinrichtung auch äußerst störanfällig. Damit beseitigt sie das Sicherheitsrisiko im Straßenverkehr nicht.

In der DE 44 07 308 C1 des Anmelders wird eine weitere Lenkeinrichtung mit Übersetzungsänderung beschrieben, bei der im Notlenkbetrieb einige Kammern der Dosierpumpe abgeschaltet und mit dem Ablauf verbunden werden.
So sind im Servolenkbetrieb alle Leitungen und im Notlenkbetrieb nur einige der Leitungen an der Ölbereitstellung für den Lenkzylinder beteiligt.
Diese Lenkeinrichtung schaltet mit hoher Sicherheit auf ein anderes, gewolltes Übersetzungsverhältnis um, wenn die Lenkeinrichtung plötzlich im Notlenkbetrieb arbeiten muß.

Alle bisher bekanntgewordenen Lenkeinrichtungen dieser Gattung basieren auf dem Funktionsprinzip, daß im Servolenkbetrieb alle vorhandenen Leitungen oder Kammern an der Ölbereitstellung für den Lenkzylinder beteiligt sind und im Notlenkbetrieb einige der Leitungen oder Kammern abgeschalten sind, also drucklos mit dem Tank verbunden sind.
Das bedeutet, daß im Notlenkbetrieb das gesamte Öl durch die Dosierpumpe über mehrere Drosselstellen angesaugt werden muß, was volumetrische Verluste zur Folge hat. Weiterhin ist das Übersetzungsverhältnis auf Grund der Anzahl der Kammern und der möglichen geometrischen Verhältnisse begrenzt und nur stufenweise realisierbar.

In der DE 195 03 331 C1 wurde nun eine Lenkeinrichtung vorgestellt, die auch eine stufenlose Übersetzungsänderung ermöglicht. Dabei wird im Servobetrieb von einem druckabhängigen Regelventil ein Nebenstrom erzeugt, der die Dosierpumpe umgeht und der vor dem Lenkzylinder wieder in den Hauptstrom einmündet und ihn quasi verstärkt. Dieser Nebenstrom ist dem Hauptstrom so angepaßt, daß das dem Lenkzylinder zugeführte Ölvolumen pro Lenkradumdrehung über den gesamten Drehzahlbereich annähernd konstant bleibt.
Aber auch bei dieser Lenkeinrichtung mit Stromverstärkung ist das Übersetzungsverhältnis auf Grund der geometrischen Verhältnisse in seiner Höhe begrenzt.

Eine weitere Lenkeinrichtung mit Stromverstärkung und damit zur Übersetzungsänderung zwischen dem Servolenkbetrieb und dem Notlenkbetrieb wurde mit der EP 0 362 534 B1 bekannt.
Diese Lenkeinrichtung besitzt ebenfalls einen, die Dosierpumpe umgehenden Nebenstrom, in dem eine verstellbare Verstärkungsdrossel angeordnet ist. Diese Verstärkungsdrossel erreicht ihren maximalen Öffnungsquerschnitt, wenn das Steuerventil der Lenkeinrichtung von der Neutralstellung in eine erste Arbeitsstellung verstellt wird. Dagegen verringert sich der Öffnungsquerschnitt der Verstärkungsdrossel bis auf Null, wenn das Steuerventil von der ersten Arbeitsstellung zur Position der maximalen Verstellung bewegt wird. Dadurch wird eine Stromverstärkung erreicht, die in der ersten Arbeitsstellung ihren Höchstwert hat und die bei Erreichen der Position der maximalen Verstellung gegen Null geht.
Diese Charakteristik ermöglicht bei kleinen Lenkdrehzahlen ein feinfühliges Lenken, führt jedoch bei größeren Lenkdrehzahlen, beispielsweise bei schnellen Ausweichmanövern oder Kurvenfahrten, zu erheblichen Problemen. Somit besteht bei dieser Lenkeinrichtung ein hohes Sicherheitsrisiko im Straßenverkehr.
Aber auch hier ist das Übersetzungsverhältnis zwischen dem Servolenkbetrieb und dem Notlenkbetrieb durch die geometrischen Verhältnisse und obendrein durch die Schwingungsanfälligkeit des federbelasteten Steuerventils bei hohen Verstärkungsvolumen begrenzt.

Es besteht daher die Aufgabe, eine gattungsgemäße Lenkeinrichtung gemäß der DE-C-4407308 weiterzuentwickeln, die stufenlos ein hohes Übersetzungsverhältnis zwischen dem Servolenkbetrieb und dem Notlenkbetrieb ermöglicht und die im Servolenkbetrieb mit steigender Lenkdrehzahl eine Erhöhung des Ölvolumens bis zu seinem Maximalwert aufweist.

Diese Aufgabe wird durch die kennzeichnenden Merkmale des Anspruchs 1 gelöst.
Zweckmäßige Ausgestaltungen ergeben sich aus den Merkmalen der Ansprüche 2 bis 8.
Mit der vorgeschlagenen Lösung werden die genannten Nachteile des Standes der Technik beseitigt.

Von besonderem Vorteil ist die Tatsache, daß mit einfachen Mitteln eine Lenkeinrichtung bereitgestellt wird, die sowohl für eine Übersetzungsänderung als auch für eine Stromverstärkung geeignet ist. Dabei wird eine gleiche Sammelleitung verwendet.
Daraus ergibt sich ein weiterer Vorteil,daß das im Notlenkbetrieb nicht benötigte Öl nicht in den Ablauf, sondern drucklos innerhalb der Lenkeinrichtung umgefördert wird. Somit muß nur für die an der Ölbereitstellung beteiligten Kammern der Dosierpumpe per Handkraft Drucköl aus dem Tank angesaugt werden. Das verbessert den volumetrischen Wirkungsgrad und das Lenkgefühl für den Fahrzeugführer.

Die Erfindung soll nachstehend an Hand eines Ausführungsbeispieles näher erläutert werden.

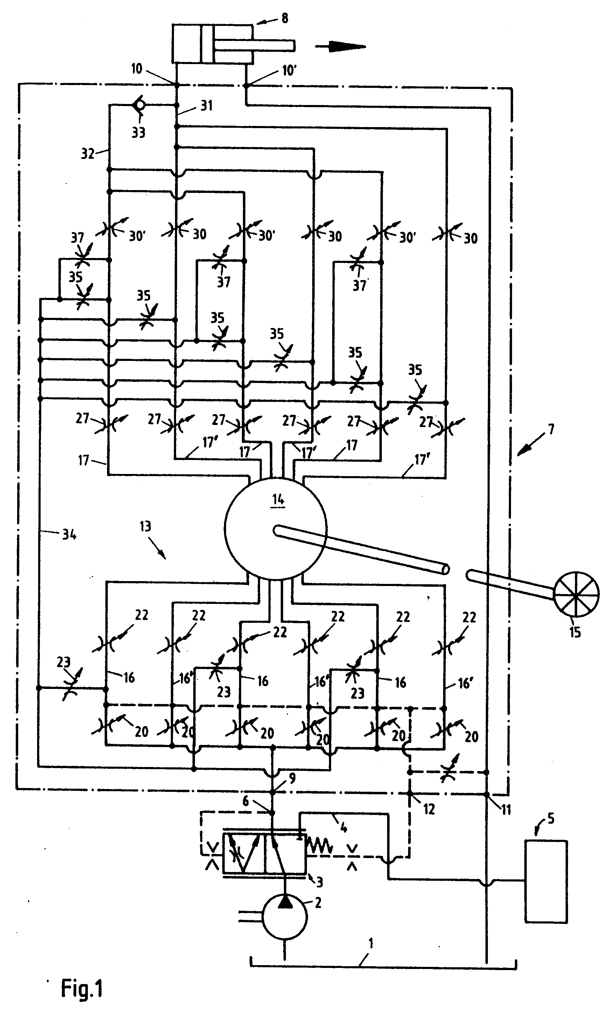

Dazu zeigen
- Fig. 1:: ein vereinfachtes Schaltbild einer Lenkeinrichtung in Load-sensing-Ausführung,

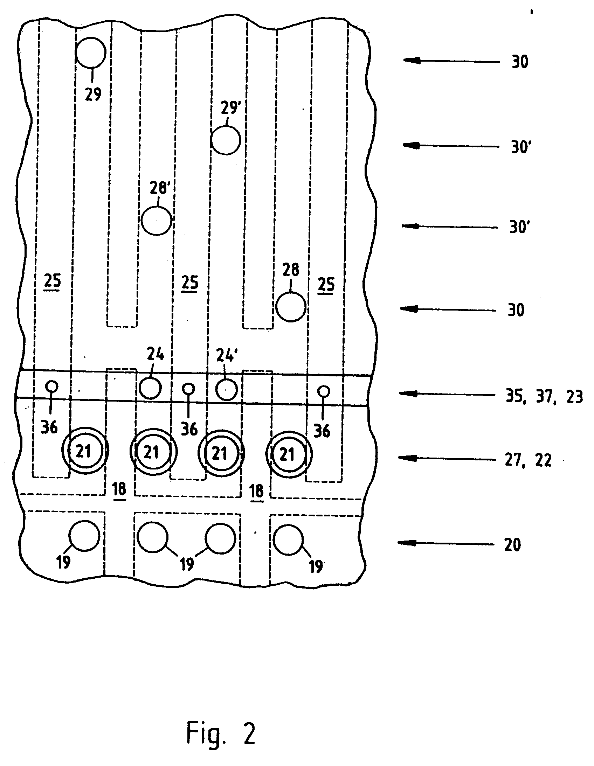

- Fig. 2:: das Steuerventil der Lenkeinrichtung in Neutralstellung,

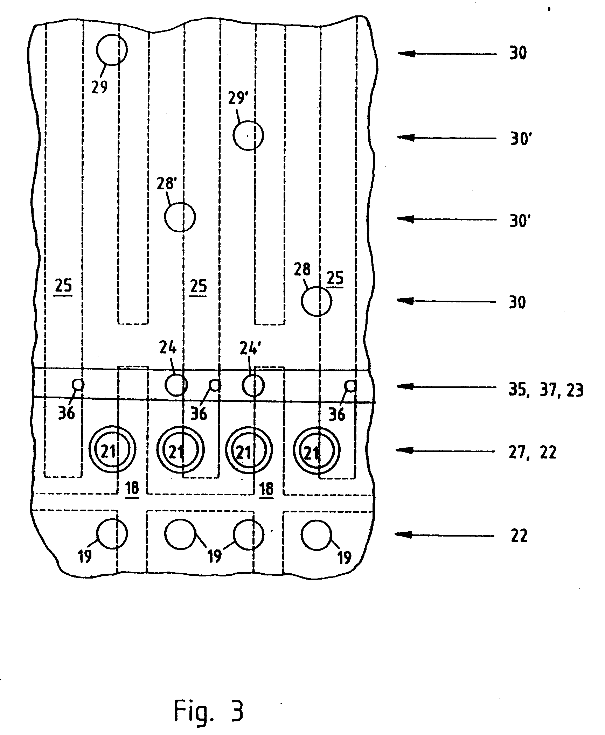

- Fig. 3:: das Steuerventil im Servolenkbetrieb bei Rechtsdrehung,

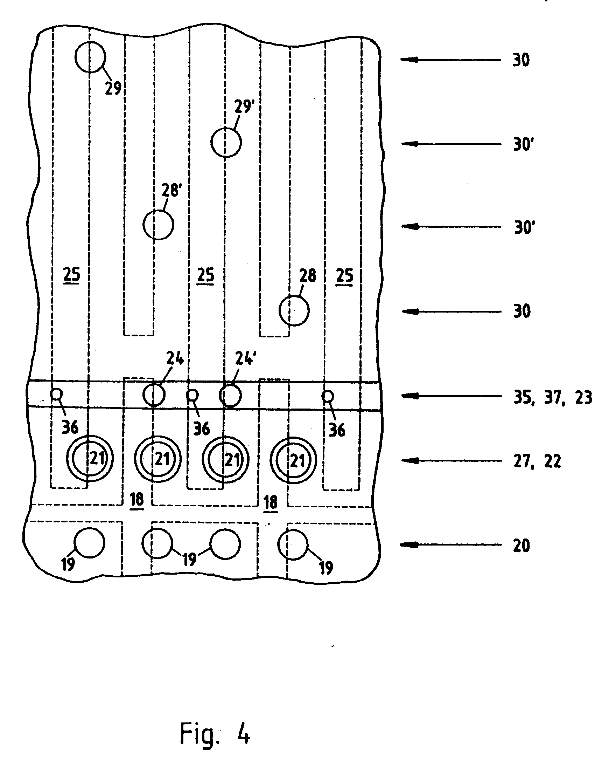

- Fig. 4:: das Steuerventil im Servolenkbetrieb bei Linksdrehung,

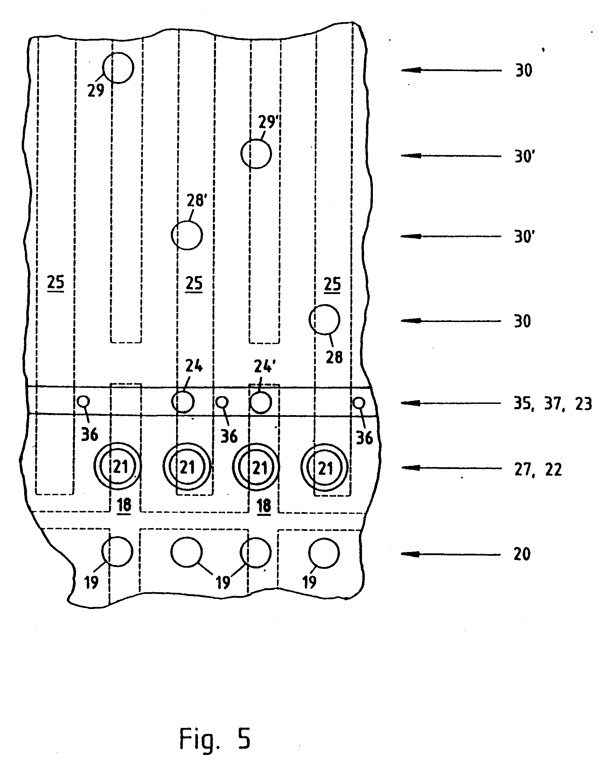

- Fig. 5:: das Steuerventil bei Rechtsdrehung im Servolenkbetrieb und im Notlenkbetrieb,
- Fig. 6:: ein Diagramm über die Öffnungscharakteristiken der beteiligten Drosseln und

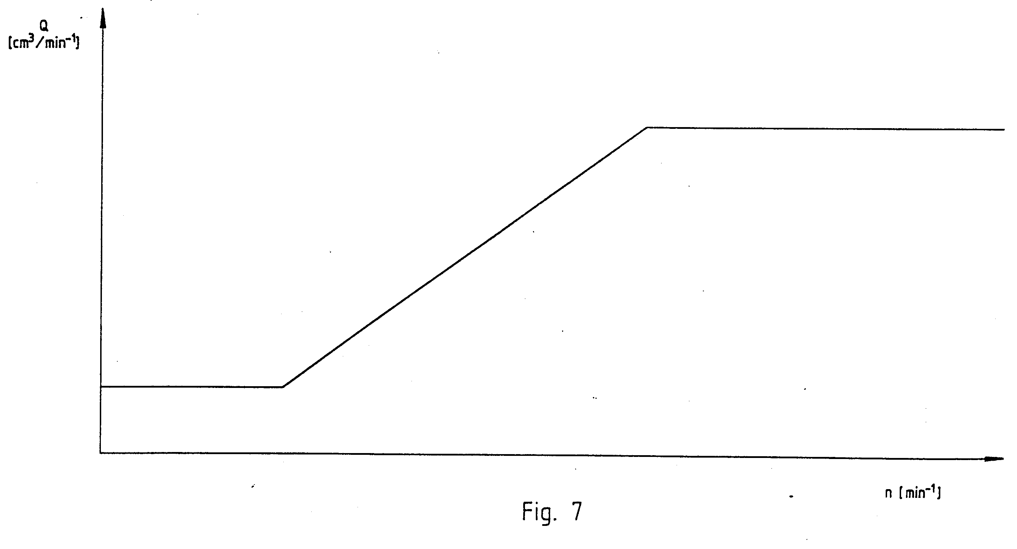

- Fig. 7:: ein Diagramm über das Ölförderverhalten in Abhängigkeit von der Lenkdrehzahl.

Der hydraulische Kreislauf ist aus Gründen der Übersichtlichkeit vereinfacht dargestellt und setzt sich aus einem Lenkkreislauf und einem Arbeitskreislauf zusammen und besteht aus einem Tank 1, einer Versorgungspumpe 2 und einem Stromteilventil 3. Vom Stromteilventil 3 zweigt eine Zulaufleitung 4 für eine Arbeitshydraulik 5 und eine Zulaufleitung 6 für eine Lenkeinrichtung 7 ab. Ein Lenkzylinder 8 ist der Lenkeinrichtung 7 nachgeordnet.
Die Lenkeinrichtung 7 besitzt einen, mit dem Stromteilventil 3 verbundenen Zulaufanschluß 9, zwei Zylinderanschlüsse 10 und 10' für den Lenkzylinder 8, einen mit dem Tank 1 verbundenen Rücklaufanschluß 11 sowie einen Lastsignalanschluß 12, der Verbindung mit der federbelasteten Seite des Stromteilventiles 3 hat.
Die Lenkeinrichtung 7 besteht in der Hauptsache aus einem Steuerventil 13 und einer nach dem Orbitprinzip arbeitenden Dosierpumpe 14 mit einem Außenring mit beispielsweise sieben und einem Läuferzahnrad mit dann sechs Zähnen.
Das Steuerventil 13 ist in einem Gehäuse eingepaßt und besitzt bekanntermaßen einen inneren, von einem Lenkrad 15 ansteuerbaren Steuerkolben und eine äußere, mit dem Rotor der Dosierpumpe 14 mechanisch verbundene Steuerhülse. Steuerkolben und Steuerhülse sind konzentrisch zueinander angeordnet und in einem begrenzten Umfang und gegen die Kraft einer Feder drehbar.
Das Steuerventil 13 besitzt sechs parallel wirkende Zulaufleitungen 16, 16', die einerseits zum Zulaufanschluß 9 und andererseits zur Eingangsseite der Dosierpumpe 14 Verbindung haben und insgesamt sechs Zylinderleitungen 17, 17', die einerseits mit der Ausgangsseite der Dosierpumpe 14 und andererseits zu einem der Zylinderanschlüsse 10 oder 10' Verbindung haben.
In den Zulaufleitungen 16, 16' befinden sich Kanäle 18 im Steuerkolben, die mit Bohrungen 19 in der Steuerhülse die ersten verstellbaren Eingangsdrosseln 20 und mit Bohrungen 21 die Zulaufdrosseln 22 bilden. Von jeder Zulaufleitung 16 zweigt zwischen der ersten Eingangsdrossel 20 und der Zulaufdrossel 22 eine verstellbare Stromverstärkungszulaufdrossel 23 ab. Diese Stromverstärkungszulaufdrosseln 23 werden durch die Kanäle 18 des Steuerkolbens und Bohrungen 24 in der Steuerhülse für die Linksdrehung und Bohrungen 24' für die Rechtsdrehung gebildet.
In den Zylinderleitungen 17, 17' bilden Kanäle 25 im Steuerkolben mit den Bohrungen 21 in der Steuerhülse je eine Ablaufdrossel 27 der Dosierpumpe, mit Bohrungen 28 bei Rechtsdrehung und Bohrungen 29 bei Linksdrehung die Drosseln 30, sowie mit Bohrungen 28' bei Rechtsdrehung und den Bohrungen 29' bei Linksdrehung die Drosseln 30'. Dabei bilden jeweils drei um 120° versetzte Kanäle 25 die Drosseln 30 und jeweils drei um 120° versetzte Kanäle 25 die Drosseln 30'. Die Drosseln 30 stehen in Verbindung mit einer Sammelleitung 31, die in den Zylinderanschluß 10 mündet. Die Drosseln 30' stehen in Verbindung mit einer Sammelleitung 32, in der sich ein in Richtung der Sammelleitung 31 öffnendes Rückschlagventil 33 befindet.
Innerhalb der Lenkeinrichtung 7 verläuft eine die Dosierpumpe 14 umgehende Sammelleitung 34, die einerseits mit den Stromverstärkungszulaufdrosseln 23 und andererseits über Stromverstärkungsablaufdrosseln 35 mit jeder Zylinderleitung 17, 17' verbunden ist. Diese Stromverstärkungsablaufdrosseln 35 werden durch die Kanäle 25 des Steuerkolbens und Bohrungen 36 gebildet. Zu jeder zweiten Stromverstärkungsablaufdrossel 35 ist eine Stromverstärkungsablaufdrossel 37 parallel geschaltet, die jeweils vor jeder Drossel 30' in die Zylinderleitung 17 einmündet.

Bei nichtbetätigter Lenkeinrichtung 7 befinden sich die Steuerhülse und der Steuerkolben des Steuerventiles 13 in neutraler Stellung, so daß die erste verstellbare Eingangsdrossel 20, die Zulaufdrosseln 22, die Ablaufdrosseln 27, die Drosseln 30 und 30', die Drosseln 37 und die Stromverstärkungszulaufdrossel 23 verschlossen, aber die Drosseln 35 des Stromverstärkungsablaufes voll geöffnet sind.
Das von der Versorgungspumpe 2 gelieferte Öl baut in der Zulaufleitung 6 vor der geschlossenen ersten verstellbaren Eingangsdrossel 20 der Lenkeinrichtung 7 einen Druck auf, der sich als Drucksignal auf die nichtfederbelastete Seite des Stromteilventiles 3 fortpflanzt.

Durch Betätigung des Lenkrades 15 kommt es zur Auslenkung des Steuerkolbens gegenüber der Steuerhülse und damit zur Öffnung der ersten verstellbaren Eingangsdrosseln 20 sowie der anderen Drosselstellen.

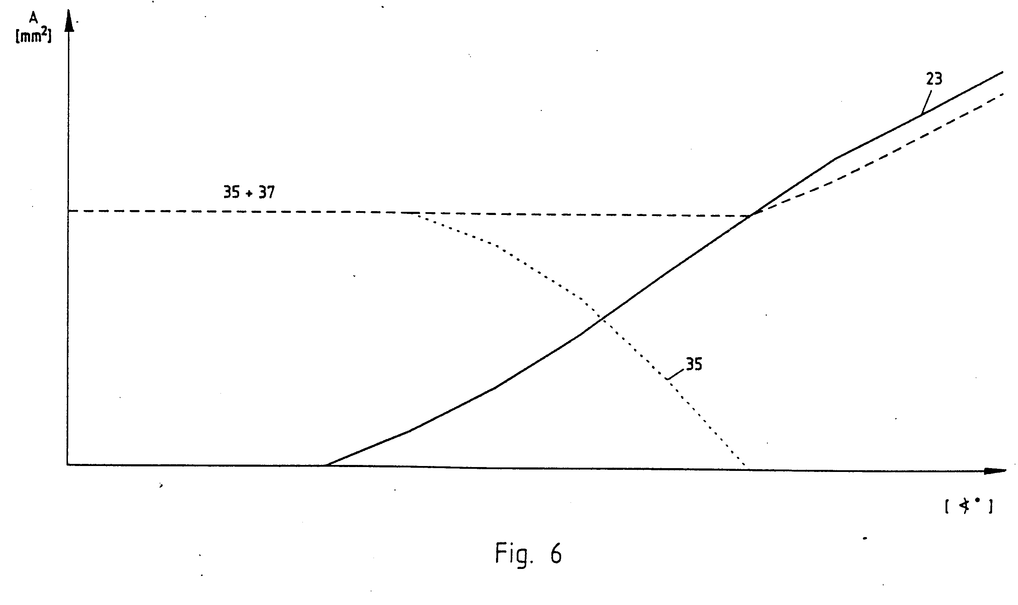

Das im Servolenkbetrieb von der Versorgungspumpe 2 bereitgestellte Öl gelangt über das durch die Druckverhältnisse im Lastsignalkreislauf entsprechend geschaltete Stromteilventil 3 durch die Zulaufleitung 6 zum Zulaufanschluß 9. Von hier strömt das Öl über die ersten verstellbaren Eingangsdrossels 20 und den Zulaufdrosseln 22 zur Dosierpumpe 14, von wo es in dosierter Menge über die Zylinderleitungen 17, 17' und den Sammelleitungen 31, 32 zum Lenkzylinder 8 geleitet wird. Dabei werden die Drosseln 30 und 30' durchströmt.
Auf Grund der Öffnungs- und Strömungsverhältnisse an den Ablaufdrosseln 27 stellt sich vor den Zulaufdrosseln 22 eine Druckdifferenz ein, die bewirkt, daß sich über die freigegebenen Querschnitte der Stromverstärkungszulaufdrosseln 23, der Sammelleitung 34 sowie der freigegebenen Querschnitte der Stromverstärkungsablaufdrosseln 35 und 37 parallel zum Hauptstrom ein Nebenstrom ergibt.
Gemäß der Fig. 6 werden bis zu einem vorbestimmten Punkt der Auslenkung des Steuerkolbens gegenüber der Steuerhülse des Steuerventils 13 beide Stromverstärkungsablaufdrosseln 35 und 37 durchströmt. Dabei nimmt der Querschnitt der Stromverstärkungsablaufdrossel 37 mindestens in dem Maße zu, wie der Querschnitt der Stromverstärkungsdrosseln 35 abnimmt. Bei Erreichen des vorbestimmten Punktes schließen die Stromverstärkungsablaufdrosseln 35, sodaß der Nebenstrom nur noch über die Stromverstärkungsdrosseln 37 abläuft. Damit bleibt die Summe der Querschnitte beider Stromverstärkungsdrosseln 35 und 37 über die gesamte Auslenkung des Steuerventils 13 annähernd konstant bzw. steigt leicht an.
Die Stromverstärkungszulaufdrosseln 23 öffnen später als die ersten verstellbaren Eingangsdrosseln 20, sodaß bis zu diesem Öffnungspunkt nur der dosierte Hauptstrom fließt. Mit zunehmender Auslenkung des Steuerkolbens gegenüber der Steuerhülse vergrößert sich der Öffnungsquerschnitt der Stromverstärkungszulaufdrosseln 23 in der Art, daß sein Verlauf den Verlauf der Öffnungsquerschnitte beider Stromverstärkungsablaufdrosseln 35 und 37 in einem vorbestimmten Punkt schneidet. Damit steigt der parallel zum Hauptstrom fließende Nebenstrom pro Lenkradumdrehung bis zu diesem Schnittpunkt stark an und verläuft anschließend konstant bzw. leicht steigend.

Im Notlenkbetrieb, also bei abgeschalteter Versorgungspumpe 2, ist die Zulaufleitung 6 drucklos. Die Arbeitshydraulik 5 kann nicht mehr versorgt werden. Das für den Lenkkreislauf notwendige Öl muß jetzt allein durch die manuelle Betätigung des Lenkrades 15 und damit von der Dosierpumpe 14 angesaugt und zum Lenkzylinder 8 gefördert werden. Dabei wird im Bereich der ersten Eingangsdrosseln 20 und den Zulaufdrosseln 22 ein Unterdruck erzeugt, der sich über die Stromverstärkungszulaufdrosseln 23, die Sammelleitung 34 sowie die Stromverstärkungsablaufdrosseln 37 und den Drosseln 30' bis zur Sammelleitung 32 fortsetzt. Die Stromverstärkungsablaufdrosseln 35 sind in diesem Betriebszustand geschlossen. Durch den Unterdruck in der Sammelleitung 32 und den Druck in der Sammelleitung 31 schließt das Rückschlagventil 33 in Richtung der Sammelleitung 32. Damit sind die Druckkammern der Dosierpumpe 14, die mit den Stromverstärkungsablaufdrosseln 37 in Verbindung stehen, mit den Ansaugkammern der Dosierpumpe 14, die mit den Stromverstärkungszulaufdrosseln 23 in Verbindung stehen, über die Sammelleitung 34 kurzgeschlossen.
Das bedeutet, daß nur die anderen drei Kammern der Dosierpumpe 14 arbeiten und damit nur das Öl dieser Kammern aus dem Ablauf angesaugt werden muß. Das Fördervolumen wird allein durch die Dosierpumpe 14 und die Anzahl der abgeschalteten Kammern bestimmt.
Wird beispielsweise eine Dosierpumpe 14 mit einem Fördervolumen von 200 cm3/U verwendet und werden 3 Kammern abgeschaltet, dann stellen sich im Servolenbetrieb bei kleinen Lenkraddrehzahlen 200 cm3/U, bei hohen Lenkraddrehzahlen 320 cm3/U und im Notlenkbetrieb 100 cm3/U ein. Somit beträgt das größte Übersetzungsverhältnis 3,2 : 1. In anderen Fällen sind andere Übersetzungsverhältnisse vorherbestimmbar.

### Aufstellung der Bezugszeichen:

- 1: Tank
- 2: Versorgungspumpe
- 3: Stromteilventil
- 4: Zulaufleitung
- 5: Arbeitshydraulik
- 6: Zulaufleitung
- 7: Lenkeinrichtung
- 8: Lenkzylinder
- 9: Zulaufanschluß
- 10, 10': Zylinderanschlüsse
- 11: Rücklaufanschluß
- 12: Lastsignalanschluß
- 13: Steuerventil
- 14: Dosierpumpe
- 15: Lenkrad
- 16, 16': Zulaufleitung
- 17, 17': Zylinderleitung
- 18: Kanal
- 19: Bohrung
- 20: Eingangsdrossel
- 21: Bohrung
- 22: Zulaufdrossel
- 23: Stromverstärkungszulaufdrossel
- 24, 24': Bohrung
- 25: Kanal
- 26:
- 27: Ablaufdrossel
- 28, 28': Bohrung
- 29: Bohrung
- 30, 30': Ablaufdrossel
- 31: Sammelleitung
- 32: Sammelleitung
- 33: Rückschlagventil
- 34: Sammelleitung
- 35: Stromverstärkungsablaufdrossel
- 36: Bohrung
- 37: Stromverstärkungsablaufdrossel

## Patentansprüche

1. Hydraulische Lenkeinrichtung mit Übersetzungsänderung und Stromverstärkung,
- die im wesentlichen aus einem Steuerventil (13) und einer Dosierpumpe (14) besteht und einen Zulaufanschluß (9), einen Rücklaufanschluß (11) und zwei Zylinderanschlüsse (10, 10') besitzt, wobei
- das Steuerventil (13) einen inneren, vom Lenkrad (15) ansteuerbaren Steuerkolben und eine äußere, mit dem Rotor der Dosierpumpe (14) mechanisch verbundene Steuerhülse besitzt und der Steuerkolben und die Steuerhülse begrenzt zueinander drehbar sind und mehrere miteinander korrespondierende Zulaufleitungen (16, 16') besitzen und
- die Dosierpumpe (14) einerseits über die Zulaufleitungen (16, 16') mit dem Zulaufanschluß (9) und andererseits über Zylinderleitungen (17, 17') in gleicher Anzahl mit einem der Zylinderanschlüsse (10, 10') verbunden ist, wobei
- ausgewählte Zylinderleitungen (17) von der Ölstromförderung abschaltbar ausgeführt sind und
- eine die Dosierpumpe (14) umgehende Sammelleitung (34) vorhanden ist,
**dadurch gekennzeichnet,** daß
- in jeder Zulaufleitung (16, 16') eine Eingangsdrossel (20) und eine Zulaufdrossel (22) und in jeder Ablaufleitung (17, 17') eine erste Ablaufdrossel (27) und eine zweite Ablaufdrossel (30, 30') angeordnet sind,
- die Sammelleitung (34) im Servolenkbetrieb als Zulaufleitung für die Stromverstärkung und im Notlenkbetrieb als Ablaufleitung für die von der Ölstromförderung abgeschalteten Zylinderleitungen (17) ausgelegt ist, wobei
- die Sammelleitung (34) über Stromverstärkungszulaufdrosseln (23) mit einer vorbestimmten Anzahl der Zulaufleitungen (16) und über erste Stromverstärkungsablaufdrosseln (37) mit den dazugehörenden Zylinderleitungen (17) verbunden ist und
- die Sammelleitung (34) über zweite Stromverstärkungsablaufdrosseln (35) mit allen Zylinderleitungen (17, 17') verbunden ist und
- die ersten Stromverstärkungsablaufdrosseln (37) mit den dazugehörenden zweiten Stromverstärkungsablaufdrosseln (35) parallel angeordnet sind und
- die Stromverstärkungszulaufdrossel (23) und die beiden Stromverstärkungsablaufdrosseln (35, 37) eine aufeinander abgestimmte Öffnungscharakteristik aufweisen.

2. Hydraulische Lenkeinrichtung nach Anspruch 1,
**dadurch gekennzeichnet,** daß die Zylinderleitungen (17) in eine Sammelleitung (32) und die Zylinderleitungen (17') in eine Sammelleitung (31) münden und beide durch ein in Richtung zur Sammelleitung (32) schließendes Rückschlagventil (33) getrennt sind.

3. Hydraulische Lenkeinrichtung nach Anspruch 1,
**dadurch gekennzeichnet,** daß die Sammelleitung (34) in den Zulaufleitungen (16) zwischen den Eingangsdrosseln (20) und den Zulaufdrosseln (22) und in den Zylinderleitungen (17, 17') zwischen den Ablaufdrosseln (27) und den Drosseln (30, 30') einmündet.

4. Hydraulische Lenkeinrichtung nach Anspruch 1,
**dadurch gekennzeichnet,** daß
- die Summe der Öffnungsquerschnitte der sich schließenden Stromverstärkungsablaufdrossel (35) und der sich öffnenden Stromverstärkungsablaufdrossel (37) von der Neutralstellung bis zu einem vorbestimmten Auslenkwinkel annähernd konstant bleibt,
- die Stromverstarkungszulaufdrossel (23) sich nach einem vorbestimmten Auslenkwinkel und vor dem Schließen der Stromverstärkungsablaufdrossel (35) öffnet,
- die Stromverstärkungsablaufdrossel (35) schließt, bevor der maximale Auslenkwinkel erreicht ist und
- die Querschnitte der Stromverstärkungszulaufdrossel (23) und der Stromverstärkungsablaufdrossel (37) eine gleiche Größe einnehmen und mit größer werdendem Auslenkwinkel einen annähernd gleichen Verlauf nehmen.

5. Hydraulische Lenkeinrichtung nach Anspruch 4,
**dadurch gekennzeichnet,** daß die Querschnitte der Stromverstärkungszulaufdrossel (23) und der Stromverstärkungsablaufdrossel (37) nach dem Schließen der Stromverstärkungsablaufdrossel (35) einen ansteigenden Verlauf nehmen.

6. Hydraulische Lenkeinrichtung nach Anspruch 1,
**dadurch gekennzeichnet,** daß die Stromverstärkungszulaufdrossel (23) durch einen in der Zulaufleitung (16) befindlichen axialen Kanal (18) und eine radiale Bohrung (24 oder 24') gebildet wird, die beide in der Neutralstellung eine negative Überdeckung mit einem radialen Abstand besitzen.

7. Hydraulische Lenkeinrichtung nach Anspruch 1,
**dadurch gekennzeichnet,** daß die Stromverstärkungsablaufdrossel ((37) durch einen in der Zylinderleitung (17) befindlichen Kanal (25) und eine radiale Bohrung (24 oder 24') gebildet wird, die beide in der Neutralstellung eine negative Überdeckung mit einen radialen Abstand besitzen.

8. Hydraulische Lenkeinrichtung nach Anspruch 1,
**dadurch gekennzeichnet,** daß die Stromverstärkungsablaufdrossel (35) durch einen in der Zylinderleitung (17, 17') befindlichen Kanal (25) und eine radiale Bohrung (36) gebildet wird, die beide in der Neutralstellung eine positive Überdeckung besitzen.

## Claims

1. Hydraulic steering device with transmission variation and flow amplification,
- which consists substantially of a control valve (13) and a metering pump (14) and has an intake connection (9), a return connection (11) and two cylinder connections (10, 10'), wherein
- the control valve (13) has an inner control piston which can be actuated by the steering wheel (15) and an outer control sleeve which is mechanically connected to the rotor of the metering pump (14), the control piston and the control sleeve can be rotated within limits with respect to one another and have a plurality of intake lines (16, 16') corresponding with one another and
- the metering pump (14) is connected on one side via the intake lines (16, 16') to the intake connection (9) and on the other side via the same number of cylinder lines (17, 17') to one of the cylinder connections (10, 10'), wherein
- selected cylinder lines (17) are constructed such that they can be disconnected from the oil flow delivery and
- a manifold (34) bypassing the metering pump (14) is provided,
characterised in that
- a feed throttle (20) and an intake throttle (22) are disposed in each intake line (16, 16'), and a first outlet throttle (27) and a second outlet throttle (30, 30') are disposed in each outlet line (17, 17'),
- the manifold (34) is designed as an intake line for the flow amplification in power-assisted steering mode and as an outlet line for the cylinder lines disconnected from the oil flow delivery in emergency steering mode, wherein
- the manifold (34) is connected via flow amplification intake throttles (23) to a predetermined number of the intake lines (16) and via first flow amplification outlet throttles (37) to the associated cylinder lines (17) and
- the manifold (34) is connected via second flow amplification outlet throttles (35) to all the cylinder lines (17, 17') and
- the first flow amplification outlet throttles (37) are disposed in parallel with the associated second flow amplification outlet throttles (35) and
- the flow amplification intake throttle (23) and the two flow amplification outlet throttles (35, 37) have opening characteristics which are adapted to one another.

2. Hydraulic steering device according to claim 1,
characterized in that the cylinder lines (17) lead into a manifold (32) and the cylinder lines (17') lead into a manifold (31) and the two manifolds are separated by a non-return valve (33) closing in the direction of the manifold (32).

3. Hydraulic steering device according to claim 1,
characterised in that the manifold (34) joins the intake lines (16) between the feed throttles (20) and the intake throttles (22) and joins the cylinder lines (17, 17') between the outlet throttles (27) and the throttles (30, 30').

4. Hydraulic steering device according to claim 1,
characterized in that
- the sum of the opening cross sections of the closing flow amplification outlet throttle (35) and the opening flow amplification outlet throttle (37) remains approximately constant from the neutral position to a predetermined angle of deflection,
- the flow amplification intake throttle (23) opens after a predetermined angle of deflection and before the flow amplification outlet throttle (35) closes,
- the flow amplification outlet throttle (35) closes before the maximum angle of deflection is reached and
- the cross sections of the flow amplification intake throttle (23) and the flow amplification outlet throttle (37) assume the same magnitude and follow an approximately identical curve as the angle of deflection increases.

5. Hydraulic steering device according to claim 4,
characterised in that the cross sections of the flow amplification intake throttle (23) and the flow amplification outlet throttle (37) follow a rising curve following the closure of the flow amplification outlet throttle (35).

6. Hydraulic steering device according to claim 1,
characterised in that the flow amplification intake throttle (23) is formed by an axial channel (18) in the intake line (16) and a radial bore (24 or 24'), both exhibiting a negative overlap with a radial spacing in the neutral position.

7. Hydraulic steering device according to claim 1,
characterised in that the flow amplification outlet throttle (37) is formed by a channel (25) in the cylinder line (17) and a radial bore (24 or 24'), both exhibiting a negative overlap with a radial spacing in the neutral position.

8. Hydraulic steering device according to claim 1,
characterised in that the flow amplification outlet throttle (35) is formed by a channel (25) in the cylinder line (17, 17') and a radial bore (36), both exhibiting a positive overlap in the neutral position.

## Revendications

1. Système hydraulique de direction, avec variation de la démultiplication et amplification du courant,
- qui se compose essentiellement d'une vanne de commande (13) et d'une pompe de dosage (14), et possède un raccord d'alimentation (9), un raccord de retour (11) et deux raccords de cylindres (10, 10'), système dans lequel
- la vanne de commande (13) possède un piston de commande intérieur, qui peut être commandé par le volant de direction (15) et un manchon de commande, relié de façon mécanique au rotor de la pompe de dosage (14), le piston de commande et le manchon de commande peuvent tourner l'un par rapport à l'autre de façon limitée et possèdent plusieurs conduites d'alimentation (16, 16') qui correspondent les unes avec les autres et
- la pompe de dosage (14) est reliée d'une part par l'intermédiaire des conduites d'alimentation (16, 16') au raccord d'alimentation (9) et d'autre part par l'intermédiaire des conduites de cylindres (17, 17') selon le même nombre avec l'un des raccords de cylindres (10, 10'),
- des conduites de cylindres (17) sélectionnées étant réalisées de façon à pouvoir être débranchées par le refoulement du courant d'huile et
- une conduite collectrice (34), qui contourne la pompe de dosage (14), étant prévue,
caractérisé en ce que
- dans chaque conduite d'alimentation (16, 16') sont disposés un organe d'étranglement d'entrée (20) et un organe d'étranglement de l'alimentation (22) et dans chaque conduite de sortie (17, 17') sont disposés un premier organe d'étranglement de sortie (27) et un deuxième organe d'étranglement (30, 30'),
- la conduite collectrice (34) est conçue lors du fonctionnement de la direction assistée en tant que conduite d'alimentation pour amplifier le courant et en fonctionnement de secours de la direction comme conduite d'évacuation pour les conduites des cylindres (17) qui sont déconnectées du refoulement du courant d'huile,
- la conduite collectrice (34) étant reliée par l'intermédiaire d'organes d'étranglement (23) de l'alimentation d'amplification du courant à un nombre prédéterminé de conduites d'alimentation (16) et par l'intermédiaire des premiers organes d'étranglement (37) aux conduites des cylindres (17) qui en font partie et
- la conduite collectrice (34) est reliée au moyen des seconds organes d'étranglement de sortie d'amplification du courant (35) à toutes les conduites de cylindres (17, 17') et
- les premiers organes d'étranglement (37) d'évacuation d'amplification du courant, qui en font partie, étant disposés en parallèle et
- l'organe d'étranglement (23) de l'alimentation d'amplification du courant et les deux organes d'étranglement (35, 37) d'évacuation d'amplification du courant présentant des courbes caractéristiques d'ouverture adaptées l'une à l'autre.

2. Système hydraulique de direction, selon la revendication 1,
caractérisé en ce que
les conduites de cylindres (17) débouchent dans une conduite collectrice (32) et les conduites de cylindres (17') débouchent dans une conduite collectrice (31) et les deux sont séparées par un clapet anti-retour (33) qui se ferme en direction de la conduite collectrice (32).

3. Système hydraulique de direction, selon la revendication 1,
caractérisé en ce que
la conduite collectrice (34) débouche dans les conduites d'alimentation (16) entre les organes d'étranglement d'entrée (20) et les organes d'étranglement d'alimentation (22) et dans les conduites de cylindres (17, 17') entre les organes d'étranglement de sortie (27) et les organes d'étranglement (30, 30').

4. Système hydraulique de direction, selon la revendication 4,
caractérisé en ce que
- la somme des sections transversales des ouvertures de l'organe d'étranglement (35) de sortie d'amplification du courant, qui se ferme, et de l'organe d'étranglement (37) de sortie d'amplification du courant, qui s'ouvre, demeure à peu près constante de la position neutre jusqu'à un angle prédéterminé de braquage,
- l'organe d'étranglement d'alimentation (23) d'amplification du courant s'ouvre après un angle prédéterminé de braquage et avant la fermeture de l'organe d'étranglement de sortie (35) d'amplification du courant,
- l'organe d'étranglement de sortie (35) d'amplification du courant se ferme avant que l'angle maximal de braquage n'ait été atteint et
- les sections transversales de l'organe d'étranglement d'alimentation (23) d'amplification du courant et de l'organe d'étranglement de sortie (37) d'amplification du courant prennent la même valeur et suivent à peu près le même déroulement avec un angle de braquage qui devient plus grand.

5. Système hydraulique de direction, selon la revendication 4,
caractérisé en ce que
les sections transversales de l'organe d'étranglement d'alimentation (23) d'amplification du courant et de l'organe d'étranglement de sortie (37) d'amplification du courant prennent un déroulement croissant après la fermeture de l'organe d'étranglement de sortie (35) d'amplification du courant.

6. Système hydraulique de direction, selon la revendication 1,
caractérisé en ce que
l'organe d'étranglement d'alimentation (23) d'amplification du courant est formé par un canal axial (18), qui se trouve dans la conduite d'alimentation (16) et un alésage radial (24 ou 24'), qui possèdent tous les deux dans la position neutre un recouvrement négatif avec un certain écartement radial.

7. Système hydraulique de direction, selon la revendication 1,
caractérisé en ce que
l'organe d'étranglement de sortie (37) d'amplification du courant est formé par un canal (25) qui se trouve dans la conduite des cylindres (17) et un alésage radial (24 ou 24'), qui possèdent tous les deux dans la position neutre un recouvrement négatif avec un certain écartement radial.

8. Système hydraulique de direction, selon la revendication 1,
caractérisé en ce que
l'organe d'étranglement de sortie (35) d'amplification du courant est formé par un canal (25) qui se trouve dans la conduite des cylindres (17, 17') et un alésage radial (36), qui possèdent tous les deux dans la position neutre un recouvrement positif.
